# EUROPÄISCHE PATENTSCHRIFT

(11) **EP 2 652 401 B1**
(45) Veröffentlichungstag und Bekanntmachung des Hinweises auf die Patenterteilung: **28.08.2019**
(21) Anmeldenummer: 11793437.2
(22) Anmeldetag: 07.12.2011
(51) Int. Cl.: F23N 1/00, F23K 5/00

(54) **GASVENTILEINHEIT MIT EINER BETÄTIGUNGSMECHANIK FÜR EIN MAGNETVENTIL**
GAS VALVE UNIT COMPRISING AN ACTUATION MECHANISM FOR A SOLENOID VALVE
UNITÉ VANNE DE GAZ COMPORTANT UN MÉCANISME D'ACTIONNEMENT POUR UNE ÉLECTROVANNE

(30) Priorität: 14.12.2010 EP 10290654
(43) Veröffentlichungstag der Anmeldung: 23.10.2013
(73) Patentinhaber: BSH Hausgeräte GmbH, 81739 München (DE)
(72) Erfinder: NAUMANN, Jörn, 77770 Durbach (DE)
(86) Internationale Anmeldenummer: PCT/EP2011/072059
(87) Internationale Veröffentlichungsnummer: WO 2012/080055

(56) Entgegenhaltungen:
- EP-A1- 0 492 057
- EP-A1- 1 672 279
- WO-A1-01/11278
- DE-A1- 1 429 062
- DE-B1- 1 529 057
- GB-A- 2 196 732
- GB-A- 2 242 257
- JP-A- 2007 333 234
- US-A1- 2006 166 154

## Beschreibung

Die Erfindung betrifft eine Gasventileinheit zum Einstellen eines einem Gasbrenner eines Gasgeräts, insbesondere eines Gaskochgeräts, zugeführten Gasvolumenstroms, wobei die Gasventileinheit ein Ventilgehäuse und eine Betätigungswelle zum Einstellen eines Öffnungsquerschnitts der Gasventileinheit und ein zusätzliches Absperrventil aufweist, und wobei eine Bewegung der Betätigungswelle mittels eines linear verschiebbaren Verbindungselement auf das Absperrventil übertragbar ist.

Gasventileinheiten der genannten Art mit einem Absperrventil werden häufig auch als gesicherte Gasventile bezeichnet. Auf einen Bedienabschnitt der Gasventileinheit ist in der Regel ein Drehknebel aufgesteckt, auf den ein Bediener des Gaskochgeräts manuell zugreifen kann. Das Einstellen des Öffnungsquerschnitts der Gasventileinheit erfolgt in der Regel durch Drehen der Betätigungswelle. Das Absperrventil kann von dem Bediener durch axiales Verschieben der Betätigungswelle geöffnet werden, indem er auf den Drehknebel drückt.

Die axiale Bewegung der Betätigungswelle wird auf ein linear verschiebbares Verbindungselement übertragen. Diese Übertragung der Bewegung der Betätigungswelle auf das Verbindungselement kann direkt oder indirekt, beispielsweise über eine Einrichtung zum Umlenken der Bewegungsrichtung, erfolgen. Das Verbindungselement steht direkt oder indirekt mit einem Absperrelement des Absperrventils in Kontakt. Mit einer axialen Bewegung des Verbindungselements in Richtung des Absperrelements kann dieses von einem Ventilsitz abgehoben und dadurch das Absperrventil geöffnet werden.

Üblicherweise besitzt das Absperrventil weiter eine Magneteinheit, mit der das Absperrelement in Offenstellung gehalten werden kann, nachdem das Absperrelement manuell durch Drücken der Ventilwelle in diese Offenstellung gebracht wurde. Die mit der Magneteinheit erzeugbare Magnetkraft ist jedoch nicht ausreichend groß, um das Absperrelement ausgehend von seiner geschlossenen Stellung in die Offenstellung zu bewegen. Die Magneteinheit enthält in der Regel eine gewickelte Spule, die mit einem im Bereich eines Gasbrenners angeordneten Thermoelement verbunden ist. Die mit dem Thermoelement erzeugte elektrische Spannung bewirkt einen Stromfluss durch die Spule der Magneteinheit und erzeugt damit eine magnetische Kraft, die das Absperrventil offen hält, solange an dem Gasbrenner eine Gasflamme brennt. Wenn die Gasflamme erlischt, schließt das Absperrventil automatisch und kann nur manuell durch Drücken der Betätigungswelle wieder geöffnet werden.

Bei Gasventileinheit des Standes der Technik besteht das Problem, dass das Absperrelement durch Eindrücken der Betätigungswelle soweit in Öffnungsrichtung bewegt werden kann, bis es an der Magneteinheit ansteht. Sofern das Eindrücken der Betätigungswelle mit großer Kraft erfolgt, kann dies zu einer Verformung des Absperrelements führen, welche die Funktion des Absperrventils beeinträchtigen kann. Insbesondere ist es möglich, dass das verformte Absperrelement von der Magneteinheit nicht mehr in Offenstellung gehalten werden kann, weil zwischen dem Absperrelement und der Magneteinheit infolge der Verformung ein zu großer Luftspalt besteht.

Die GB 2 242 257 A, die EP 1 672 279 A1 und die GB 2 196 732 A beschreiben jeweils eine Gasventileinheit für einen Gasbrenner mit einem Absperrventil, wobei eine Bewegung einer Betätigungswelle der Gasventileinheit mittels eines verschiebbaren Verbindungselements auf das Absperrventil übertragbar ist.

Die EP 0 492 057 A1 beschreibt einen Gashahn mit einem scheibenförmigen Mehrfunktionsteil, das an eine Betätigungswelle des Gashahns gekoppelt ist. Mit Hilfe des Mehrfunktionsteils ist ein Sicherheitsventil des Gashahns betätigbar.

Die DE 1 529 057 B1 beschreibt eine Einrichtung für ein automatisches Ein- und Abschalten von Gasbrennstellen. Die Einrichtung unterbricht den Gasfluß zur Gasbrennstelle wenn die Brennerflamme erlischt.

Die JP 2007 333234 A beschreibt eine Gasventileinheit für ein Gaskochgerät. Die Gasventileinheit umfasst ein Ventilgehäuse und eine elektromotorisch angetriebene Betätigungswelle. Ferner umfasst die Gasventileinheit ein Absperrventil, wobei eine rotatorische Bewegung der Betätigungswelle mit Hilfe einer Ansteuernocke auf das Absperrventil übertragbar ist.

Der vorliegenden Erfindung liegt die Aufgabe zugrunde, eine Gasventileinheit zur Verfügung zu stellen, bei der die Funktion des Absperrventils dauerhaft sicher gewährleistet ist.

Diese Aufgabe wird erfindungsgemäß dadurch gelöst, dass das Verbindungselement mindestens eine als Schraubenfeder ausgeführte Feder aufweist. Die Schraubenfeder weist einen variierenden Wicklungsradius auf. Wenn auf das Verbindungselement eine besonders große Kraft ausgeübt wird, gibt die Feder nach und verhindert so eine Beschädigung von Bauteilen des Absperrventils. Gleichzeitig ist die Feder derart ausgelegt, dass normale Betätigungskräfte von der Feder übertragen werden. Die Feder stellt sicher, dass bei einem Drücken der Betätigungswelle durch die Bedienperson das Absperrventil so weit geöffnet wird, dass das Absperrelement anschließend, beispielsweise mittels einer von einem Thermoelement mit Strom versorgten Magneteinheit, selbsttätig offengehalten werden kann. Als "Feder" wird im vorliegenden Zusammenhang jedes kraftabhängig formveränderliche und/oder längenveränderliche Element bezeichnet, unabhängig von dem Material und/oder von der Formgebung des Elements. In Frage kommen beispielsweise gewickelte Metallfedern oder gespritzte Kunststofffedern.

Zweckmäßig ist es, wenn das Verbindungselement zur Übertragung von Druckkräften geeignet ist. Unter dem Begriff "Druckkraft" ist hierbei eine linear wirkende Kraft zu verstehen.

Die Feder des Verbindungselements ist zweckmäßig als Druckfeder ausgeführt. Die Druckfeder ändert bei einer linearen Krafteinwirkung ihre Länge.

Die Feder des Verbindungselements ist als Schraubenfeder ausgeführt.

Die Schraubenfeder weist einen variierenden Wicklungsradius auf. Bei einer Schraubenfeder mit variierendem Wicklungsradius verändert sich der Wicklungsradius über die Länge der Schraubenfeder derart, dass die Schraubenfeder an einer Stelle einen geringeren Durchmesser als an einer anderen, von der ersten Stelle in axialer Richtung beabstandeten Stelle hat.

Zweckmäßigerweise ist das Verbindungselement in einem Bereich mit dem maximalen Wicklungsradius der Schraubenfeder in dem Ventilgehäuse geführt. Bei Schraubenfedern mit konstantem Wicklungsradius ist die gesamte Länge der Schraubenfeder der Bereich mit dem maximalen Wicklungsradius. Der Bereich mit dem maximalen Wicklungsradius ist die breiteste Stelle des Verbindungselements überhaupt.

Das Absperrelement ist mittels einer Schließfeder in Schließstellung vorgespannt. Damit ist sichergestellt, dass das Absperrventil in Ruhestellung stets geschlossen ist. Durch manuelles Drücken der Betätigungswelle kann das Absperrventil entgegen der Kraft der Schließfeder geöffnet werden. In Schließstellung liegt das Absperrelement an einem Ventilsitz des Absperrventils auf und verhindert so den Durchfluss von Gas durch die Gasventileinheit.

Vorteilhafterweise ist eine Federkonstante der Feder des Verbindungselements größer als eine Federkonstante der Schließfeder. Ein Drücken der Betätigungswelle führt daher zunächst in erster Linie zu einem Zusammendrücken der Schließfeder und damit zu einem Öffnen des Absperrventils. Erst dann, wenn das Absperrventil maximal geöffnet ist und das Absperrelement an einem Endanschlag anliegt, erhöht sich die auf das Verbindungselement wirkende Kraft, wodurch sich die Feder des Verbindungselements verstärkt zusammendrückt. Die maximal auf das Absperrelement wirkende Kraft ist damit durch die Feder des Verbindungselements begrenzt.

Gemäß einer zweckmäßigen Ausgestaltung der Erfindung ist eine Umlenkvorrichtung vorgesehen, die eine axiale Bewegung der Betätigungswelle in eine dazu im Wesentlichen rechtwinkelige axiale Bewegung des Verbindungselements überträgt. Eine solche Umlenkvorrichtung ist insbesondere dann erforderlich, wenn die Baugröße der Gasventileinheit in Längsrichtung der Betätigungswelle begrenzt ist.

Hierbei weist die Umlenkvorrichtung ein erstes Gleitelement auf, das an der Betätigungswelle im Bereich des einem Bedienabschnitt entgegengesetzten Endes der Betätigungswelle angeordnet ist. Der Bedienabschnitt der Betätigungswelle ist der Abschnitt, auf den beispielsweise ein Drehknebel aufgesteckt werden kann. Das dem Bedienabschnitt entgegengesetzte Ende der Betätigungswelle befindet sich im Inneren des Gehäuses der Gasventileinheit.

Bevorzugt ist das erste Gleitelement als erstes kegelförmiges Element ausgeführt, derart, dass eine Spitze des ersten kegelförmigen Elements von dem Bedienabschnitt der Betätigungswelle weg weist. Die Ausführung des Gleitelements als kegelförmiges Element hat den Vorteil, dass die räumliche Ausdehnung des Gleitelements unabhängig von der Rotationsposition der Betätigungswelle ist.

Die Umlenkvorrichtung weist ein zweites Gleitelement auf, das sich zumindest während eines Drückens der Betätigungswelle in Kontakt mit dem ersten Gleitelement befindet.

Das zweite Gleitelement ist als zweites kegelförmiges Element ausgebildet, dessen Mittelachse im Wesentlichen senkrecht zu der Betätigungswelle angeordnet ist und dessen Spitze in Richtung des ersten Gleitelements weist. Bei einem axialen Verschieben des ersten Gleitelements gleiten die beiden Gleitelemente aneinander ab und das zweite Gleitelement verschiebt sich in axialer Richtung des zweiten Gleitelements.

Bevorzugt ist das zweite Gleitelement an dem der Betätigungswelle zugewandten Ende des Verbindungselements angeordnet. Eine axiale Bewegung des zweiten Gleitelements bewirkt dadurch automatisch eine axiale Bewegung des Verbindungselements.

Bevorzugt weist das Verbindungselement zumindest einen Abschnitt auf, in dem ein Federdraht parallel zu einer Bewegungsrichtung des Verbindungselements ausgerichtet ist. In diesem Abschnitt wird der Federdraht in Längsrichtung belastet und besitzt daher keine Federwirkung in Belastungsrichtung. Es handelt sich um einen Abschnitt desselben Federdrahts, aus dem auch die Schraubenfeder ausgebildet ist.

Mit besonderem Vorteil ist das zweite Gleitelement an dem Federdraht befestigt, bevorzugt an dem zur Bewegungsrichtung des Verbindungselements parallelen Abschnitt des Federdrahts.

Gemäß einer besonders vorteilhaften Ausführung weist die Gasventileinheit zum Einstellen des Öffnungsquerschnitts mindestens zwei Auf-Zu-Ventile und mindestens zwei Drosselstellen mit jeweils mindestens einer Drosselöffnung auf, die in Abhängigkeit von der Schaltstellung der Auf-Zu-Ventile mit Gas durchströmbar sind. Das Einstellen des Öffnungsquerschnitts erfolgt damit durch gezieltes Öffnen und Schließen der Auf-Zu-Ventile. Dies erfolgt durch Drehen der Betätigungswelle. Beispielsweise kann zum Öffnen und Schließen der Auf-Zu-Ventile ein Permanentmagnet vorgesehen sein, der über die Auf-Zu-Ventile hinweg bewegt wird. Jeweils das Auf-Zu-Ventil, das sich direkt im Bereich des Permanentmagnets befindet, wird durch Magnetkraft geöffnet. Das Absperrventil hingegen wird durch Drücken der Betätigungswelle mittels einer mechanischen Kraft geöffnet. Anschließend kann es mittels einer elektromagnetischen Kraft, beispielsweise in Folge der von einem Thermoelement zur Flammenüberwachung erzeugten Spannung, offengehalten werden.

Weitere Vorteile und Einzelheiten der Erfindung werden anhand des in den schematischen Figuren dargestellten Ausführungsbeispiels näher erläutert. Dabei zeigt
- Figur 1: eine schematische Schaltanordnung der Auf-Zu-Ventile und der Drosselstellen mit einem ersten geöffneten Auf-Zu-Ventil,
- Figur 2: die schematische Schaltanordnung mit zwei geöffneten Auf-Zu-Ventilen,
- Figur 3: die schematische Schaltanordnung mit dem letzten geöffneten Auf-Zu-Ventil,
- Figur 4: einen schematischen Aufbau einer Gasventilanordnung mit geschlossenen Auf-Zu-Ventilen,
- Figur 5: den schematischen Aufbau der erfindungsgemäßen Gasventileinheit in geschlossenem Zustand,
- Figur 6: die Gasventileinheit bei geöffnetem Absperrventil,
- Figur 7: die Gasventileinheit bei geöffnetem Absperrventil und geöffnetem Auf-Zu-Ventil,
- Figur 8: die geöffnete Gasventileinheit mit nicht gedrückter Betätigungswelle,
- Figur 9: das Absperrventil in geschlossenem Zustand,
- Figur 10: das geöffnete Absperrventil,
- Figur 11: das geöffnete Absperrventil mit weit gedrückter Betätigungswelle,
- Figur 12: die Gasventileinheit in einer Schnittdarstellung.

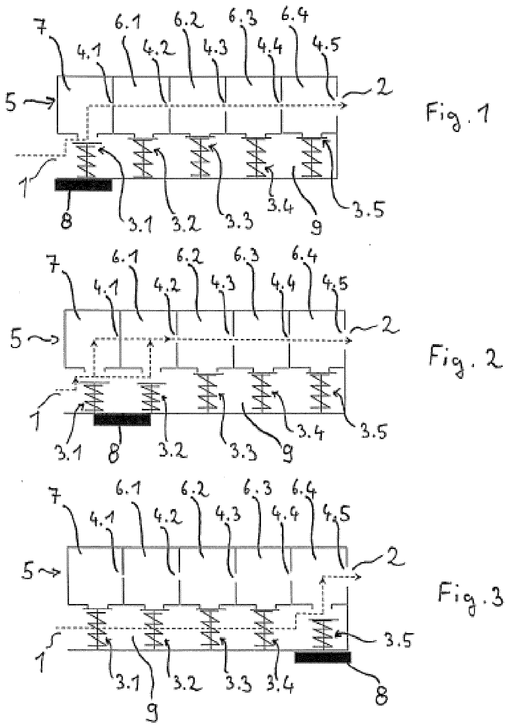

Die Figuren 1 bis 3 zeigen die Schaltanordnung der Auf-Zu-Ventile 3 (3.1 bis 3.5) und der Drosselstellen 4 (4.1 bis 4.5) der Gasventileinheit. Das erfindungsgemäße Absperrventil und das Verbindungselement sind hier jedoch nicht dargestellt.

Zu erkennen ist ein Gaseingang 1, mit dem die Gasventileinheit beispielsweise an eine Hauptgasleitung eines Gaskochgeräts angeschlossen ist. An dem Gaseingang 1 steht das zur Verbrennung vorgesehene Gas mit einem konstanten Druck von beispielsweise 20 Millibar oder 50 Millibar an. An einen Gasausgang 2 der Gasventileinheit wird eine beispielsweise zu einem Gasbrenner des Gaskochgeräts führende Gasleitung angeschlossen. Der Gaseingang 1 ist über einen Gaseingangsraum 9 der Gasventileinheit mit der Eingangsseite der im vorliegenden Ausführungsbeispiel fünf Auf-Zu-Ventile 3 (3.1 bis 3.5) verbunden. Durch Öffnen der Auf-Zu-Ventile 3 ist der Gaseingang 1 jeweils mit einem bestimmten Abschnitt einer Drosselstrecke 5 verbunden, in den das Gas über das geöffnete Auf-Zu-Ventil 3 einströmt. Die Drosselstrecke 5 umfasst einen Eingangsabschnitt 7, in den das erste Auf-Zu-Ventil 3.1 mündet. Die weiteren Auf-Zu-Ventile 3.2 bis 3.5 münden jeweils in einen Verbindungsabschnitt 6 (6.1 bis 6.4) der Drosselstrecke 5. Der Übergang zwischen dem Eingangsabschnitt 7 und dem ersten Verbindungsabschnitt 6.1, sowie die Übergänge zwischen zwei benachbarten der Verbindungsabschnitte 6.1 bis 6.4 sind jeweils von einer Drosselstelle 4 (4.1 bis 4.5) gebildet. Die letzte Drosselstelle 4.5 verbindet den letzten Verbindungsabschnitt 6.4 mit dem Gasausgang 2. Die Drosselstellen 4.1 bis 4.5 besitzen einen der Reihe nach zunehmendem Öffnungsquerschnitt. Der Durchflussquerschnitt der letzten Drosselstelle 4.5 kann so groß gewählt sein, dass die letzte Drosselstelle 4.5 praktisch keine Drosselfunktion besitzt.

Die Betätigung der Auf-Zu-Ventile 3 erfolgt mittels eines Permanentmagnets 8, der entlang der Reihe der Auf-Zu-Ventile 3 verschiebbar ist. Die Kraft zum Öffnen des jeweiligen Auf-Zu-Ventils 3 wird dabei direkt von der Magnetkraft des Permanentmagnets 8 gebildet. Diese Magnetkraft öffnet das jeweilige Auf-Zu-Ventil 3 entgegen einer Federkraft.

In der Schaltstellung gemäß Figur 1 ist ausschließlich das erste Auf-Zu-Ventil 3.1 geöffnet. Durch dieses Auf-Zu-Ventil 3.1 strömt das Gas von dem Gaseingangsraum 9 in den Eingangsabschnitt 7 und passiert von dort aus auf dem Weg zum Gasausgang 2 sämtliche Drosselstellen 4 und sämtliche Verbindungsabschnitte 6. Die Menge des durch die Ventileinheit strömenden Gases gibt die Minimalleistung des an die Gasventileinheit angeschlossenen Gasbrenners vor.

Figur 2 zeigt die schematische Schaltanordnung, bei der der Permanentmagnet 8 derart nach in der Zeichnung rechts verschoben ist, dass sowohl das erste Auf-Zu-Ventil 3.1 als auch das zweite Auf-Zu-Ventil 3.2 geöffnet sind.

Durch das geöffnete zweite Auf-Zu-Ventil 3.2 strömt das Gas von dem Gaseingangsraum 9 direkt in den ersten Verbindungsabschnitt 6.1 und von dort über die Drosselstellen 4.2 bis 4.5 zum Gasausgang 2. Das zum Gasausgang 2 strömende Gas umgeht aufgrund des geöffneten Auf-Zu-Ventils 3.2 die erste Drosselstelle 4.1. Der Gasvolumenstrom in der Schaltstellung gemäß Figur 2 ist deshalb größer als der Gasvolumenstrom in der Schaltstellung gemäß Figur 1. Der Gaszufluss zu dem ersten Verbindungsabschnitt 6.1 erfolgt praktisch ausschließlich über das zweite Auf-Zu-Ventil 3.2. Aufgrund der offen stehenden Auf-Zu-Ventile 3.1 und 3.2 herrscht in dem Eingangsabschnitt 7 dasselbe Druckniveau wie in dem ersten Verbindungsabschnitt 6.1. Aus dem Eingangsabschnitt 7 strömt über die erste Drosselstelle 4.1 deshalb so gut wie kein Gas in den ersten Verbindungsabschnitt 6.1 nach. Der insgesamt durch die Gasventileinheit strömende Gasvolumenstrom ändert sich daher praktisch nicht, wenn der Permanentmagnet 8 weiter nach in der Zeichnung rechts bewegt wird und dadurch das erste Auf-Zu-Ventil 3.1 bei geöffnetem zweiten Auf-Zu-Ventil 3.2 geschlossen wird.

Durch Bewegen des Permanentmagnets 8 nach in der Zeichnung rechts werden die Auf-Zu-Ventile 3.3. bis 3.5 sukzessive geöffnet und dadurch der Gasvolumenstrom durch die Gasventileinheit schrittweise erhöht.

Figur 3 zeigt die schematische Schaltanordnung der Gasventileinheit in maximal geöffneter Stellung. Hierbei befindet sich der Permanentmagnet 8 in seiner Endstellung auf der in der Zeichnung rechten Seite. Das letzte Auf-Zu-Ventil 3.5 ist bei dieser Position des Permanentmagnets 8 geöffnet. Gas strömt hierbei direkt aus dem Gaseingangsraum 9 in den letzten Verbindungsabschnitt 6.4 und passiert auf dem Weg zum Gasausgang 2 ausschließlich die letzte Drosselstelle 4.5. Diese letzte Drosselstelle 4.5 kann einen derart großen Durchflussquerschnitt aufweisen, dass praktisch keine Drosselung des Gasstroms eintritt und das Gas die Gasventileinheit praktisch ungedrosselt durchströmen kann.

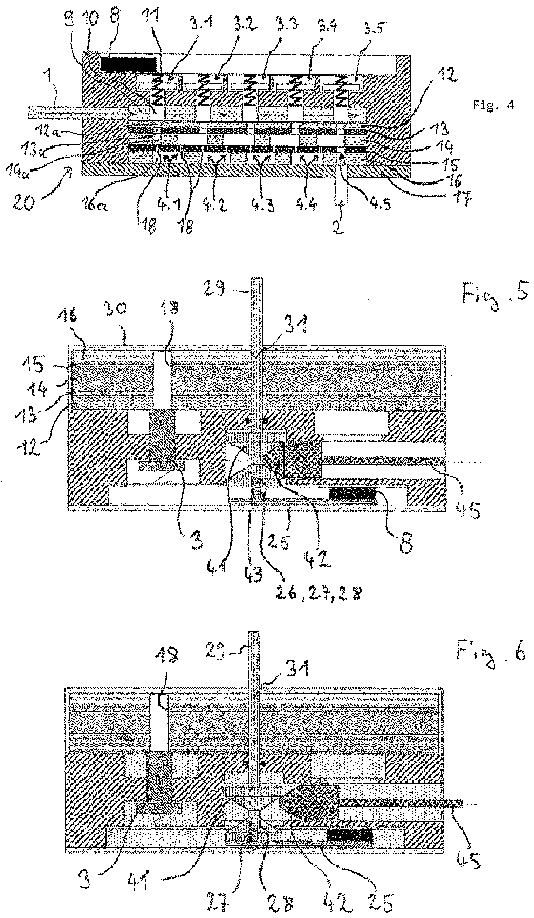

Figur 4 zeigt schematisch einen konstruktiven Aufbau einer Gasventileinheit mit einer Schaltanordnung gemäß Figur 1 bis 3. Das erfindungsgemäße Absperrventil ist hier ebenfalls nicht dargestellt.

Zu erkennen ist in Figur 4 ein Ventilkörper 20, in dem der Gaseingang 1 der Gasventileinheit ausgeführt ist. Im Inneren des Ventilkörpers 20 befindet sich ein mit dem Gaseingang 1 verbundener Gaseingangsraum 9. Absperrkörper 10 der Auf-Zu-Ventile 3 sind in dem Ventilkörper 20 geführt, derart, dass sie sich in der Zeichnung nach oben und unten bewegen können. Jeder Absperrkörper 10 ist mittels einer Feder 11 nach in der Zeichnung unten vorgespannt. Mittels der Kraft des Permanentmagnets 8 kann jeder Absperrkörper 10 entgegen der Kraft der Feder 11 nach in der Zeichnung oben bewegt werden. Die Federn 11 drücken die Absperrkörper auf eine Ventildichtplatte 12, so dass die Absperrkörper 10 in der Ventildichtplatte 12 vorhandene Öffnungen 12a gasdicht verschließen. Unterhalb der Ventildichtplatte 12 ist eine Druckplatte 13 angeordnet, mit Öffnungen 13a, die mit den Öffnungen 12a in der Ventildichtplatte 12 korrespondieren. Die Öffnungen 13a in der Druckplatte 13 münden in Öffnungen 14a in eine erste Gasverteilungsplatte 14. In der Zeichnung unterhalb der ersten Gasverteilungsplatte 14 befindet sich eine Drosselplatte 15 mit einer Vielzahl von Drosselöffnungen 18. Jede der Drosselstellen 4.1 bis 4.4 wird dabei von zwei Drosselöffnungen 18 gebildet. Die zwei zu einer Drosselstelle 4.1 bis 4.4 gehörenden Drosselöffnungen 18 sind jeweils mittels der Öffnungen 16a in einer zweiten Gasverteilungsplatte 16 miteinander verbunden. Die Öffnungen 14a in der ersten Gasverteilungsplatte verbinden hingegen die nebeneinander liegenden Drosselöffnungen 18 zweier benachbarter Drosselstellen 4.1 bis 4.5. Die letzte Drosselstelle 4.5 besteht aus nur einer Drosselöffnung 18, welche über eine korrespondierende Öffnung 16a in der zweiten Gasverteilungsplatte 16 in den Gasausgang 2 der Gasventileinheit mündet.

Bei der Schaltstellung gemäß Figur 4 befindet sich der Permanentmagnet 8 in einer Endposition, in der alle Auf-Zu-Ventile 3 geschlossen sind. Die Gasventileinheit ist damit insgesamt geschlossen. Der Gasvolumenstrom ist gleich null. Ausgehend von dieser Schaltstellung wird der Permanentmagnet 8 nach in der Zeichnung rechts bewegt, wodurch jeweils die unter dem Permanentmagnet 8 angeordneten Auf-Zu-Ventile 3 geöffnet werden.

Die Figuren 5 bis 8 zeigen den schematischen Aufbau der erfindungsgemäßen Gasventilanordnung. Zu erkennen ist das Verbindungselement 45, jedoch nicht die zum Verbindungselement 45 gehörende Feder. Zu erkennen ist das im Wesentlichen rotationssymmetrische Ventilgehäuse 20 mit einer zentral angeordneten Betätigungswelle 31. Die beispielsweise fünf Auf-Zu-Ventile 3 sind entlang eines Kreisbogens um die Betätigungswelle 31 angeordnet. An dem oberen Ende der Betätigungswelle 31 befindet sich deren Bedienabschnitt 29, auf den beispielsweise ein Drehknebel aufgesteckt werden kann. An dem unteren Ende der Betätigungswelle 31 ist eine Betätigungsvorrichtung 25 angeordnet, an deren äußerem Ende der Permanentmagnet 8 angeordnet ist. Bei einem Drehen der Bestätigungswelle 31 bewegt sich der Permanentmagnet 8 entlang eines Kreisbogens an den Auf-Zu-Ventilen 3 vorbei. Jeweils genau die Auf-Zu-Ventile 3, die sich direkt über dem Permanentmagnet 8 befinden, werden durch die Magnetkraft des Permanentmagnets 8 geöffnet. Oben auf die Betätigungswelle 31 kann beispielsweise ein von der Bedienperson direkt greifbarer Drehknebel aufgesteckt sein.

An der Oberseite des Ventilkörpers ist eine Abdeckung 30 ausgebildet, in der, von unten nach oben, die Ventildichtplatte 12, die Druckplatte 13, die erste Gasverteilungsplatte 14, die Drosselplatte 15 und die zweite Gasverteilungsplatte 16 angeordnet sind. Die Platten 12 bis 16 sind durch Abnehmen der Abdeckung 30 zugänglich. Der Zugang zu den Platten 12 bis 16 erfolgt von oben, d. h. von derselben Seite, aus der die Betätigungswelle 31 aus dem Ventilgehäuse 20 ragt.

Zur Anpassung der Gasventileinheit an eine andere Gasart ist insbesondere die Drosselplatte 15 auszutauschen. In der Drosselplatte 15 befinden sich die Drosselöffnungen 18, welche die Größe des Gasvolumenstroms maßgeblich festlegen. Nach einem Abnehmen der Abdeckung nach oben befinden sich alle Platten 12 bis 16 in der Abdeckung 30.

Zu erkennen ist weiter die Anordnung zur Betätigung des in dieser Abbildung nicht dargestellten Absperrventils 40. Diese umfasst ein erstes Gleitelement 41, das an der Betätigungswelle 31 befestigt ist. Das erste Gleitelement 41 steht in Kontakt mit einem zweiten Gleitelement 42, das über ein Verbindungselement 45 an einen Ventilkörper des Absperrventils gekoppelt ist. Beide Gleitelemente 41, 42 sind von kegelförmigen Körpern gebildet. Ein dritter kegelförmiger Körper 43 dient als Teil einer Koppelvorrichtung 26, mit welcher eine Drehbewegung der Betätigungswelle 31 auf die Betätigungsvorrichtung 25 übertragen wird. Die Koppelvorrichtung 26 besteht im Wesentlichen aus einem Mitnehmer 27, der in eine schlitzförmige Ausnehmung 28 eingreift.

In der in Figur 5 dargestellten Position befindet sich die Gasventileinheit in vollständig geschlossener Stellung. Die Rotationsposition der Betätigungswelle 31 ist derart gewählt, dass sich der Permanentmagnet 8 nicht unterhalb eines Auf-Zu-Ventils 3 befindet und damit alle Auf-Zu-Ventile 3 geschlossen sind. Darüber hinaus ist die Betätigungswelle 31 auch nicht in axialer Richtung eingedrückt. Das zweite Gleitelement 42 befindet sich in einer linken Anschlagposition. Aufgrund der Formgebung des ersten Gleitelements 41 als kegelförmiger Körper hat eine ausschließliche Drehbewegung der Betätigungswelle 31 und damit des ersten Gleitelements 41 keinen Einfluss auf die Position des zweiten Gleitelements 42. Aus demselben Grund ist das untere Ende der Betätigungswelle 31 ebenfalls von einem (dritten) kegelförmigen Körper 43 gebildet.

In der Schaltposition gemäß Figur 5 befindet sich im Ventilgehäuse 20 der Gasventileinheit aufgrund des geschlossenen Absperrventils 40 kein Gas.

Wenn nun die Schaltwelle 31 in axialer Richtung nach unten eingedrückt wird, öffnet sich das Absperrventil 40 und das Ventilgehäuse 20 füllt sich mit Gas.

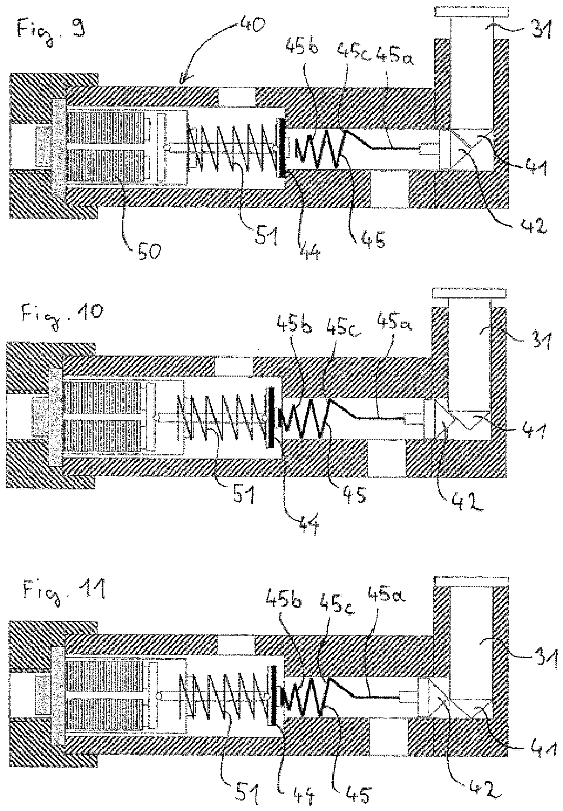

Dieser Zustand der Gasventileinheit ist in Figur 6 dargestellt. Hierbei hat das erste Gleitelement 41 das zweite Gleitelement 42 mit dem Verbindungselement 45 nach in der Zeichnung rechts gedrückt. Das Verbindungselement 45 wirkt direkt auf das Absperrelement 44 des Absperrventils 40 (siehe Figur 10), so dass dieses geöffnet ist. Der in der Zeichnung untere Bereich der Gasventileinheit ist dadurch mit Gas gefüllt (siehe gepunktete Flächen). Hingegen sind die Auf-Zu-Ventile 3 weiterhin geschlossen, so dass der Durchflussquerschnitt der Gasventileinheit weiterhin gleich Null ist.

In Figur 6 darüber hinaus zu erkennen ist die Ausbildung der Koppelvorrichtung 26 mit dem flachen Mitnehmer 27, der in die schlitzförmige Ausnehmung 28 des dritten kegelförmigen Körpers 43 eingesteckt ist. Eine axiale Bewegung der Betätigungswelle 31 ist durch diese Kombination aus Mitnehmer 27 und Ausnehmung 28 ausgleichbar, so dass eine solche Bewegung nicht auf die Betätigungsvorrichtung 25 der Auf-Zu-Ventile 3 übertragen wird.

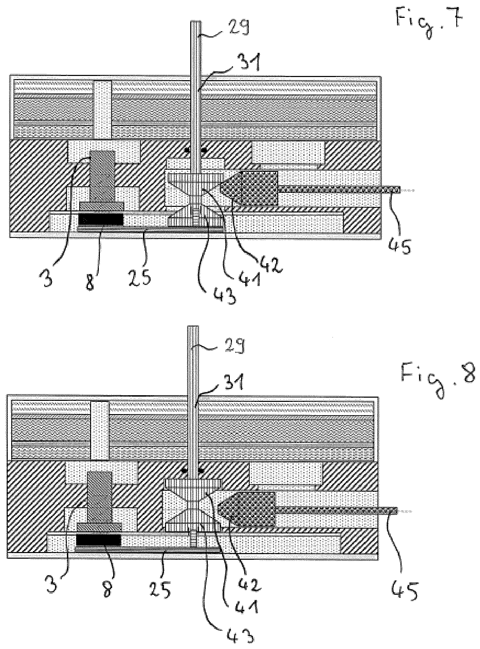

Figur 7 zeigt eine weitere Betriebsposition der Gasventileinheit, in der das Absperrventil 40 durch Eindrücken der Betätigungswelle 31 geöffnet ist und darüber hinaus eines der Auf-Zu-Ventile 3 mittels des Permanentmagnets 8 geöffnet ist. Durch dieses geöffnete Auf-Zu-Ventil 3 strömt nun Gas auch in den Bereich oberhalb des Auf-Zu-Ventils in Richtung des Gasausgangs 2. Das Absperrventil 40 wird hierbei mechanisch über das erste Gleitelement 41, das zweite Gleitelement 42 und das Verbindungselement 45 in Offenstellung gehalten.

Im Gegensatz hierzu zeigt Figur 8 eine Betriebsstellung der Gasventileinheit, bei der das Absperrelement 44 des Absperrventils 40 mittels der Kraft eines in der vorliegenden Abbildung nicht dargestellten Elektromagnets in Offenstellung gehalten ist. Die Betätigungswelle 32 befindet sich hier in nicht eingedrückter Position, so dass das erste Gleitelement 41 keine Kraft auf das zweite Gleitelement 42 ausübt. In dieser Stellung befindet sich die Gasventileinheit während des laufenden Betriebs, wenn an dem mit der Gasventileinheit verbundenen Gasbrenner eine Flamme brennt.

Die erfindungsgemäße Vorrichtung zur Betätigung des Absperrventils 40 wird im Folgenden anhand der Figuren 9, 10 und 11 näher beschrieben. Zu erkennen ist hier jeweils das erste Gleitelement 41, das zweite Gleitelement 42, ein von einer Feder gebildetes Verbindungselement 45, das Absperrelement 44 sowie eine Magneteinheit 50. Die geschlossene Ruheposition des Absperrventils 40 ist durch die auf den Absperrkörper 10 wirkende Schließfeder 51 sichergestellt. Das zweite Gleitelement 42 ist mit der in der Zeichnung rechten Seite mit dem Verbindungselement 45 verbunden.

Das Verbindungselement 45 ist durchgehend aus Federdraht gebogen. Es besitzt einen parallel zur Bewegungsrichtung des Verbindungselements 45 ausgerichteten Abschnitt 45a. In diesem Abschnitt 45a besitzt das Verbindungselement 45 keine Federwirkung. In einem schraubenförmig gewickelten Abschnitt besitzt der Federdraht die Funktion einer Feder 45b. Die Feder 45b besitzt einen in Längsrichtung der Feder 45b variierenden Wicklungsradius. Dies ermöglicht ein Einfedern der Feder 45b, ohne dass sich dabei benachbarte Wicklungen der Feder 45b aufeinander abstützen, aneinander reiben oder ineinander verhaken. Der Bereich 45c mit maximalem Wicklungsradius der Feder 45b stützt sich in radialer Richtung an dem Gehäuse des Absperrventils 40 ab. Gemeinsam mit dem zweiten Gleitelement 42, das sich ebenfalls in radialer Richtung an dem Gehäuse des Absperrventils 40 abstützt, definiert der Bereich 45c der Feder 45b die mögliche Bewegungsrichtung des Verbindungselements 40.

In der Darstellung gemäß Figur 9 ist die Betätigungswelle 31 nicht eingedrückt. Das Absperrventil 40 ist durch die Kraft der Schließfeder 51 geschlossen. Das Verbindungselement 45 weist zu dem Absperrkörper 10 einen Abstand auf.

In der Schaltstellung gemäß Figur 10 ist die Betätigungswelle 31 eingedrückt, so dass das zweite Gleitelement 42 mit dem Verbindungselement 45 nach in der Zeichnung links verschoben ist und das Absperrelement 44 entgegen der Kraft der Schließfeder 51 von seinem Ventilsitz abhebt. Das Absperrventil 40 kann hierdurch von Gas durchströmt werden.

In der Darstellung gemäß Figur 11 ist die Betätigungswelle 31 ebenfalls eingedrückt, jedoch weiter als in der Position gemäß Figur 10. Folglich ist auch das zweite Gleitelement 42 weiter nach in der Zeichnung links verschoben, als in Figur 10. Damit diese weitere Bewegung des zweiten Gleitelements 42 nicht auf das Absperrelement 44 des Absperrventils 40 übertragen wird, ist das Verbindungselement 45 als Feder ausgeführt. Die das Verbindungselement 45 bildende Feder 45b ist jedoch wesentlich steifer ausgeführt als die Schließfeder 51 des Absperrventils 40. Die Ausbildung des Verbindungselements 45 als Feder 45b dient insbesondere dazu, Beschädigungen des Absperrventils 40 zu vermeiden, wenn auf die Betätigungswelle 31 mit übermäßig großer Kraft gedrückt wird.

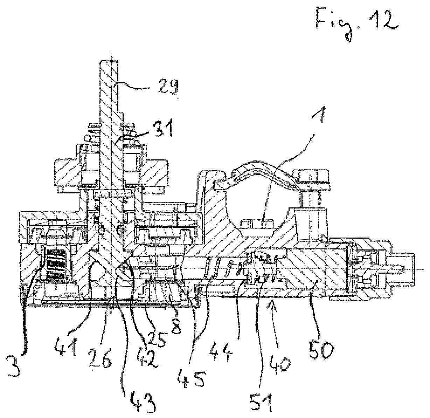

Figur 12 zeigt eine erfindungsgemäße Gasventileinheit im Querschnitt. Dargestellt sind der Gaseingang 1, welcher direkt in das Absperrventil 40 mündet. Von dem Absperrventil 40 sind insbesondere der Absperrkörper 10, die Schließfeder 51 und die Magneteinheit 50 zu erkennen.

Das als Feder 45b ausgebildete Verbindungselement 45 ist zur Übertragung einer Druckkraft von dem zweiten Gleitelement 42 auf den Absperrkörper 10 geeignet. Das zweite Gleitelement 42 gleitet dabei an dem ersten Gleitelement 41 ab, welches aus der Betätigungswelle 31 ausgebildet ist.

Unterhalb des ersten Gleitelements 41 befindet sich das dritte kegelförmige Element 43 mit der Koppelvorrichtung 26, die eine Drehbewegung der Betätigungswelle 31 auf den Permanentmagnet 8 überträgt. Der Permanentmagnet 8 öffnet mittels seiner Magnetkraft jeweils das direkt über ihm befindliche Auf-Zu-Ventil 3.

### BEZUGSZEICHENLISTE

- 1: Gaseingang
- 2: Gasausgang
- 3 (3.1 bis 3.5): Auf-Zu-Ventile
- 4 (4.1 bis 4.5): Drosselstellen
- 5: Drosselstrecke
- 6 (6.1 bis 6.4): Verbindungsabschnitt
- 7: Eingangsabschnitt
- 8: Permanentmagnet
- 9: Gaseingangsraum
- 10: Absperrkörper
- 11: Feder
- 12: Ventildichtplatte
- 12a: Öffnungen
- 13: Druckplatte
- 13a: Öffnungen
- 14: erste Gasverteilungsplatte
- 14a: Öffnungen
- 15: Drosselplatte
- 16: zweite Gasverteilungsplatte
- 16a: Öffnungen
- 17: Abschlussplatte
- 18: Drosselöffnungen
- 20: Ventilgehäuse
- 25: Betätigungsvorrichtung
- 26: Koppelvorrichtung
- 27: Mitnehmer
- 28: Ausnehmung
- 29: Bedienabschnitt
- 30: Abdeckung
- 31: Betätigungswelle
- 32: Abdeckplatte
- 33: Muldengehäuse
- 34: Arbeitsplatte
- 40: Absperrventil
- 41: erstes Gleitelement
- 42: zweites Gleitelement
- 43: dritter kegelförmiger Körper
- 44: Absperrelement
- 45: Verbindungselement
- 45a: paralleler Abschnitt
- 45b: Feder
- 45c: Bereich mit maximalem Wicklungsradius
- 50: Magneteinheit
- 51: Schließfeder

## Patentansprüche

1. Gasventileinheit zum Einstellen eines einem Gasbrenner eines Gasgeräts, insbesondere eines Gaskochgeräts, zugeführten Gasvolumenstroms, wobei die Gasventileinheit ein Ventilgehäuse (20) und eine Betätigungswelle (31) zum Einstellen eines Öffnungsquerschnitts der Gasventileinheit und ein zusätzliches Absperrventil (40) aufweist, wobei eine Bewegung der Betätigungswelle (31) mittels eines linear verschiebbaren Verbindungselements (45) auf das Absperrventil (40) übertragbar ist, wobei das Verbindungselement (45) mindestens eine als Schraubenfeder ausgeführte Feder (45b) aufweist, **dadurch gekennzeichnet, dass** die Schraubenfeder einen variierenden Wicklungsradius aufweist.

2. Gasventileinheit nach Anspruch 1, **dadurch gekennzeichnet, dass** das Verbindungselement (45) zur Übertragung von Druckkräften geeignet ist.

3. Gasventileinheit nach Anspruch 1 oder 2, **dadurch gekennzeichnet, dass** die Feder (45b) des Verbindungselements (45) als Druckfeder ausgeführt ist.

4. Gasventileinheit nach einem der Ansprüche 1 bis 3, **dadurch gekennzeichnet, dass** das Verbindungselement (45) in einem Bereich (45c) mit dem maximalen Wicklungsradius der Schraubenfeder in dem Ventilgehäuse (20) geführt ist.

5. Gasventileinheit nach einem der Ansprüche 1 bis 4, **dadurch gekennzeichnet, dass** ein Absperrelement (44) des Absperrventils (40) mittels einer Schließfeder (51) in Schließstellung vorgespannt ist.

6. Gasventileinheit nach Anspruch 5, **dadurch gekennzeichnet, dass** eine Federkonstante der Feder (45b) des Verbindungselements (45) größer ist als eine Federkonstante der Schließfeder (51).

7. Gasventileinheit nach einem der Ansprüche 1 bis 6, **dadurch gekennzeichnet, dass** eine Umlenkvorrichtung vorgesehen ist, die eine axiale Bewegung der Betätigungswelle (31) in eine dazu im wesentlichen rechtwinkelige axiale Bewegung des Verbindungselements (45) überträgt.

8. Gasventileinheit nach einem der Ansprüche 1 bis 7, **dadurch gekennzeichnet, dass** die Umlenkvorrichtung ein erstes Gleitelement (41) aufweist, das an der Betätigungswelle (31) im Bereich des einem Bedienabschnitt (29) entgegengesetzten Endes der Betätigungswelle (31) angeordnet ist.

9. Gasventileinheit nach Anspruch 8, **dadurch gekennzeichnet, dass** die Umlenkvorrichtung ein zweites Gleitelement (41) aufweist, das sich zumindest während eines Drückens der Betätigungswelle (31) in Kontakt mit dem ersten Gleitelement (41) befindet.

10. Gasventileinheit nach Anspruch 9, **dadurch gekennzeichnet, dass** das zweite Gleitelement (42) an dem der Betätigungswelle (31) zugewandten Ende des Verbindungselements (45) angeordnet ist.

11. Gasventileinheit nach einem der Ansprüche 1 bis 10, **dadurch gekennzeichnet, dass** das Verbindungselement (45) zumindest einen Abschnitt (45a) aufweist, in dem ein Federdraht parallel zu einer Bewegungsrichtung des Verbindungselements (45) ausgerichtet ist.

12. Gasventileinheit nach einem der Ansprüche 9 bis 11, **dadurch gekennzeichnet, dass** das zweite Gleitelement an dem Federdraht befestigt ist, bevorzugt an dem zur Bewegungsrichtung des Verbindungselements (45) parallelen Abschnitt des Federdrahts.

13. Gasventileinheit nach einem der Ansprüche 1 bis 12, **dadurch gekennzeichnet, dass** die Gasventileinheit zum Einstellen des Öffnungsquerschnitts mindestens zwei Auf-Zu-Ventile (3) und mindestens zwei Drosselstellen (4) mit jeweils mindestens einer Drosselöffnung (18) aufweist, die in Abhängigkeit von der Schaltstellung der Auf-Zu-Ventile (3) mit Gas durchströmbar sind.

## Claims

1. Gas valve unit for setting a gas volume flow supplied to a gas burner of a gas appliance, in particular a gas cooker, wherein the gas valve unit has a valve housing (20) and an actuation pin (31) for setting an opening cross section of the gas valve unit and an additional shutoff valve (40), wherein a movement of the actuation pin (31) is able to be transferred to the shutoff valve (40) by means of a linearly displaceable connecting element (45), wherein the connecting element (45) has at least one spring (45b) embodied as a coil spring, **characterised in that** the coil spring has a varying winding radius.

2. Gas valve unit according to claim 1, **characterised in that** the connecting element (45) is suitable for transferring pressure forces.

3. Gas valve unit according to claim 1 or 2, **characterised in that** the spring (45b) of the connecting element (45) is embodied as a compression spring.

4. Gas valve unit according to one of claims 1 to 3, **characterised in that** the connecting element (45) is passed through the valve housing (20) in a region (45c) where the coil spring has the maximum winding radius.

5. Gas valve unit according to one of claims 1 to 4, **characterised in that** a shutoff element (44) of the shutoff valve (40) is pretensioned into a closed position by means of a closing spring (51).

6. Gas valve unit according to claim 5, **characterised in that** a spring constant of the spring (45b) of the connecting element (45) is greater than a spring constant of the closing spring (51).

7. Gas valve unit according to one of claims 1 to 6, **characterised in that** a deflection apparatus is provided, which converts an axial movement of the actuation pin (31) to an axial movement of the connecting element (45) essentially at right angles thereto.

8. Gas valve unit according to one of claims 1 to 7, **characterised in that** the deflection apparatus has a first slide element (41), which is disposed on the actuation pin (31) in the region of the end of the actuation pin (31) opposite an operating segment (29).

9. Gas valve unit according to claim 8, **characterised in that** the deflection apparatus has a second slide element (41), which is in contact with the first slide element (41) at least when the actuation pin (31) is pushed.

10. Gas valve unit according to claim 9, **characterised in that** the second slide element (42) is disposed at the end of the connecting element (45) facing the actuation pin (31).

11. Gas valve unit according to one of claims 1 to 10, **characterised in that** the connecting element (45) has at least one segment (45a), in which a spring wire is aligned parallel to a movement direction of the connecting element (45).

12. Gas valve unit according to one of claims 9 to 11, **characterised in that** the second slide element is attached to the spring wire, preferably to the segment of the spring wire parallel to the movement direction of the connecting element (45).

13. Gas valve unit according to one of claims 1 to 12, **characterised in that** the gas valve unit for setting the opening cross section has at least two on-off valves (3) and at least two throttle points (4), each having at least one throttle opening (18), through which gas can flow as a function of the switching position of the on-off valves (3).

## Revendications

1. Unité vanne de gaz destinée au réglage d'un débit volumique de gaz amené au brûleur à gaz d'un appareil à gaz, en particulier d'un appareil de cuisson à gaz, cette unité vanne de gaz comportant un corps de vanne (20) et une clé d'actionnement (31) pour régler une section d'ouverture de l'unité vanne de gaz et une vanne de blocage (40) supplémentaire, un mouvement de la clé d'actionnement (31) pouvant être transféré, au moyen d'un élément de raccord (45) linéairement mobile, sur la vanne de blocage (40), cet élément de raccord (45) comportant au moins un ressort réalisé en ressort à boudin (45b), **caractérisée en ce que** le ressort à boudin présente un rayon d'enroulement variable.

2. Unité vanne de gaz selon la revendication 1, **caractérisée en ce que** l'élément de raccord (45) convient pour transférer des forces de compression.

3. Unité vanne de gaz selon la revendication 1 ou 2, **caractérisée en ce que** le ressort (45b) de l'élément de raccord (45) est réalisé comme un ressort de pression.

4. Unité vanne de gaz selon l'une des revendications 1 à 3, **caractérisée en ce que** l'élément de raccord (45) est conduit dans une zone (45c) présentant le rayon d'enroulement maximal du ressort à boudin dans le corps de vanne (20).

5. Unité vanne de gaz selon l'une des revendications 1 à 4, **caractérisée en ce qu'**un élément de blocage (44) de la vanne de blocage (40) est précontraint au moyen d'un ressort de serrage (51) en position de serrage.

6. Unité vanne de gaz selon la revendication 5, **caractérisée en ce que** la constante de rappel du ressort (45b) de l'élément de raccord (45) est plus grande que la constante de rappel du ressort de serrage (51).

7. Unité vanne de gaz selon l'une des revendications 1 à 6, **caractérisée en ce qu'**un dispositif d'articulation est prévu, lequel transfère le mouvement axial de la clé d'actionnement (31) en un mouvement axial à cet effet essentiellement à angle droit de l'élément de raccord (45).

8. Unité vanne de gaz selon l'une des revendications 1 à 7, **caractérisée en ce que** ce dispositif d'articulation comporte une premier élément coulissant (41) agencé à la clé d'actionnement (31) dans la zone de l'extrémité opposée à une section de commande (29) de cette clé d'actionnement (31).

9. Unité vanne de gaz selon la revendication 8, **caractérisée en ce que** le dispositif d'articulation comporte un deuxième élément coulissant (41) qui se trouve au moins pendant une pression de la clé d'actionnement (31) en contact avec le premier élément coulissant (41).

10. Unité vanne de gaz selon la revendication 9, **caractérisée en ce que** le deuxième élément coulissant (42) est agencé sur l'extrémité de l'élément de raccord (45), face à la clé d'actionnement (31).

11. Unité vanne de gaz selon l'une des revendications 1 à 10, **caractérisée en ce que** l'élément de raccord (45) comporte au moins une section (45a) dans laquelle le fil d'un ressort est orienté parallèlement au sens de mouvement de l'élément de raccord (45).

12. Unité vanne de gaz selon l'une des revendications 9 à 11, **caractérisée en ce que** le deuxième élément coulissant est fixé au fil de ressort, de préférence à la section du fil de ressort qui est parallèle au sens de mouvement de l'élément de raccord (45).

13. Unité vanne de gaz selon l'une des revendications 1 à 12, **caractérisée en ce que** cette unité vanne de gaz comporte, pour le réglage de la section d'ouverture, au moins deux vannes tout-ou-rien (3) et au moins deux points d'étranglement (4) ayant chacun au moins un orifice d'étranglement (18), lesquels peuvent être parcourus, en fonction de la position des vannes tout-ou-rien (3), par du gaz.
